# EUROPEAN PATENT APPLICATION

(11) **EP 3 885 630 A1**
(43) Date of publication of application: **29.09.2021**
(21) Application number: 20897667.0
(22) Date of filing: 25.08.2020
(51) Int. Cl.: F16L 51/02

(54) **COMPENSATOR FOR HIGH PRESSURE**

(30) Priority: 27.12.2019 KR 20190175811
(71) Applicant: DONGYANG ENTERPRISE CO., LTD., Gyeongsangnam-do 50591 (KR)
(72) Inventor: SHIN, Jeong Sik, Haeundae-gu Busan 48059 (KR); KIM, Kwang Rok, Yangsan-si Gyeongsangnam-do 50573 (KR); Lee Chan Woo, Mulgeum-eup Yangsan-si Gyeongsangnam-do 50656 (KR)
(74) Representative: Spittle, Mark Charles
(86) International application number: PCT/KR2020/011281
(87) International publication number: WO 2021/132835

(57) **Abstract**

A high pressure compensator is proposed. The high pressure compensator is provided between pipes, through which high pressure fluid flows, to connect a plurality of pipes to each other, has excellent pressure-resistance against high pressure by fiber reinforcement, in addition to absorbing vibrations and thermal expansion to compensate for the movement of pipe equipment, so that separation or damages of elements thereof may be prevented by increasing the coupling force between the elements.

## Description

### CROSS REFERENCE TO RELATED APPLICATION

The present application claims priority to Korean Patent Application No. 10-2019-0175811, filed 27.12.2019, the entire contents of which is incorporated herein for all purposes by this reference.

### BACKGROUND OF THE INVENTION

### Field of the Invention

The present disclosure relates generally to a high pressure compensator and, more particularly, to a compensator provided between pipelines, through which high pressure fluid flows, to connect a plurality of pipes to each other, wherein the compensator absorbs vibrations and thermal expansion to compensate for the movement of pipe equipment and is fiber-reinforced to secure excellent pressure-resistance against high pressure, and has an increased coupling force between parts of the compensator, thereby preventing separation or damages of the parts.

### Description of the Related Art

In general, pipe equipment that may move a variety of gasses or fluids is provided in ships, plants, water and sewage systems, and buildings. It is difficult to make the pipe equipment into a single continuous form from the beginning, so the pipe equipment is constructed by a method of connecting pipes of a unit length to each other, cutting the pipes by desired lengths, and connecting the pipes to each other.

However, a number of pipes with straight, crossed, and curved structures should be organically connected to each other according to the structure and the surrounding conditions of a place where the pipes are located, and even when initial set arrangement thereof becomes inappropriate due to a change of the surrounding conditions in the future, it is not easy to greatly deform and modify the pipe equipment arrangement.

In particular, the pipes arranged in a ship are subjected to tensile and compressive force due to the hogging or sagging of the ship.

The tensile and compressive force are applied to a hull of the ship due to the unbalanced interaction of hull load and buoyancy force, and the force acting on the hull generates a relative displacement in a left-right or up-down direction between a main pipe and a branch pipe arranged in the hull, but also concentrates excessive stress on a connecting portion between the pipes.

Expansion or contraction occurs in the pipes due to the temperature change of the fluid flowing in the pipes, so the pipe arrangement should be designed to cope with deformation of the pipes according to the temperature change.

When designing the pipe equipment, the arrangement appropriateness of a pipe should be evaluated and when the arrangement is predetermined to be inappropriate, the pipe arrangement should be changed.

However, when it is difficult to relocate the pipe due to the connection with other pipes due to the constraint of hull structure and the interference of surrounding equipment, an expansion joint, that is, a compensator is used at the connection portion.

The compensator is a mechanical element for pipes installed on the pipeline and connects separated pipes and is used to absorb vibrations or impacts acting on the pipes generated by a flow of fluid and to cope with thermal-expansion deformation to compensate for the movement of the pipe equipment.

In general, the compensator is classified into an axial compensator, angular compensator, lateral compensator, and universal compensator.

The axial compensator serves to compensate for movement in an axial direction, the angular compensator serves to compensate for movement in a curved or angular direction, the lateral compensator serves to compensate for movement in a transverse or lateral direction, and the universal compensator serves to compensate for distortion in all spatial direction and flexure axes.

The compensator is classified into a metallic compensator and non-metallic compensator depending on the material. The metallic compensator is strong against high pressure, but is week to flexible vibration, so the metallic compensator is uneconomical because of inevitable replacement caused by damage when the compensator is used for a long time. In order to substitute the metallic compensator, a non-metallic compensator having flexibility is widely used.

Korean patent No. 10-0307307 has disclosed a technique related to an expansion joint pipe for casting. The expansion joint pipe of the related art has a structure in which first to fourth collecting rubbers are attached with a grain direction of 45 degrees between an inner rubber and an outer rubber and first and second collecting rubbers wrap a wire ring in a state where ends thereof are not cut. The expansion joint is made of only a flexible and elastic rubber material, and when expansion continues when internal pressure is increased, the expansion joint may be damaged, e.g., ruptured by tension.

US patent No. 4,155,573 has disclosed a technique related to an elastic pipe connector having a rubber bellows body in which fiber-type reinforcing inserts are embedded between end beads. In the elastic pipe connector, the strength of the expanded bellows body may be increased by the reinforcing inserts, but when high pressure is applied in the elastic pipe connector, the end beads and the bellows body may be separated.

### SUMMARY OF THE INVENTION

Accordingly, the present disclosure has been made keeping in mind the above problems occurring in the related art, and the present disclosure is intended to propose a high pressure compensator provided between pipelines, through which high pressure fluid flows, to connect a plurality of pipes and to absorb vibrations and thermal expansion to compensate for the movement of the pipe equipment.

Another objective of the present disclosure is intended to propose a high pressure compensator that has improved pressure-resistance against high pressure through fiber reinforcement, and has an increased coupling force between parts of the compensator to prevent the parts from being separated or damaged due to internal pressure.

The objective of the present disclosure are not limited to the above-mentioned objectives, and other objectives not mentioned will be clearly understood by those of ordinary skill in the art from the description below the present disclosure.

In order to achieve the above objective, according to one aspect of the present invention, there is provided a high pressure compensator, the high pressure compensator being provided between pipelines through which high pressure fluid flows and connecting a plurality of pipes to each other, the high pressure compensator including: an inside layer made of a rubber material that may absorb vibrations in a low frequency band, the inside layer having a hollow tubular shape and providing an inner circumferential surface of the compensator, and having insertion portions depressed to a predetermined depth on outer circumferential surfaces of opposite end portions of the inside layer; an intermediate layer made of a rubber material that may absorb vibrations in a high frequency band, and laminated on an outside of the inside layer; a pair of fixing rings having a ring shape, and provided at opposite end portions of the intermediate layer, respectively; a fiber reinforcing layer made of aramid fiber, the fiber reinforcing layer being laminated on an outside of the intermediate layer, and having opposite end portions inserted in inner circumferences of the fixing rings and fixed thereto while covering outer circumferential surfaces of the fixing rings; an outside layer made of a nonflammable rubber material, and laminated on an outside of the fiber reinforcing layer; a pair of flanges having a hollow cylindrical shape, and coupled to opposite end portions of the outside layer, respectively, and having a plurality of fastening holes formed by penetrating the flanges; and a pair of stoppers having a ring shape, the stoppers being provided at opposite ends of the compensator, respectively, each of the stoppers having a surface that is in close contact with both an end portion of the outside layer and an end portion of an associated one of the flanges, and having a coupler protruding along a circumference of an inner circumferential surface thereof to be securely inserted in each of the insertion portions.

The inside layer may be made of nitrile butadiene rubber (NBR) with hardness of 60 to 70.

The intermediate layer may be made of natural rubber (NR) with hardness of 40 to 5.

Each of the stoppers may include a curved surface that may be concavely rounded on a first surface of the stopper to be in close contact with the convexly rounded end portion of the outside layer, and a groove that may be formed by being grooved to a predetermined depth along a shape of the stopper on a second surface of the stopper.

A ring-shaped packing made of a rubber material may be securely inserted in the groove.

The high pressure compensator of the present disclosure is provided between the pipes, through which high pressure fluid flows, to connect a plurality of pipes to each other and to absorb vibrations and thermal resistance, so that the movement of the pipe equipment can be compensated.

The high pressure compensator of the present disclosure may have improved pressure-resistance against high pressure through fiber reinforcement to increase a coupling force between parts of the compensator to prevent the parts from being separated and damaged due to internal pressure, so that safety in installation and operation of the compensator can be secured.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view showing a high pressure compensator according to an exemplary embodiment of the present disclosure.
FIG. 2 is an exploded-perspective view showing the high pressure compensator according to the exemplary embodiment of the present disclosure.
FIG. 3 is a sectional view showing the high pressure compensator according to the exemplary embodiment of the present disclosure.
FIG. 4 is a partial detailed view showing an installation state of a flange and a stopper shown in FIG. 3.

### DETAILED DESCRIPTION OF THE INVENTION

The above and other objects, features, and advantages of the present disclosure will be more clearly understood from the following detailed description taken in conjunction with the accompanying drawings. It should be understood that the embodiment of the present disclosure may be changed to a variety of embodiments and the scope and spirit of the present disclosure are not limited to the embodiment described hereinbelow. The embodiment of the present disclosure described hereinbelow is only provided for allowing those skilled in the art to more clearly comprehend the present disclosure, and the present disclosure should be defined by the accompanying claims.

A detailed description for an embodiment of the present disclosure will be described in detail with reference to accompanying drawings. The same reference numerals are used throughout the different drawings to designate the same or similar components. As used herein, the term "and/or" includes any and all combinations of one or more of the associated listed items.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments of the present disclosure.

The terminology used herein is for the purpose of describing particular embodiments only and is not intended to be limiting of example embodiments of the invention. As used herein, the singular forms "a", "an", and "the", are intended to include the plural forms as well, unless the context clearly indicates otherwise. As used herein, the terms "and/or" and "at least one of" include any and all combinations of one or more of the associated listed items. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Hereinbelow, a preferred embodiment of the present disclosure will be described in detail with reference to the accompanying drawings.

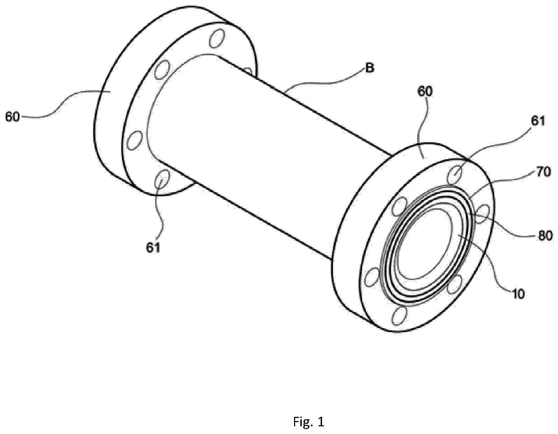

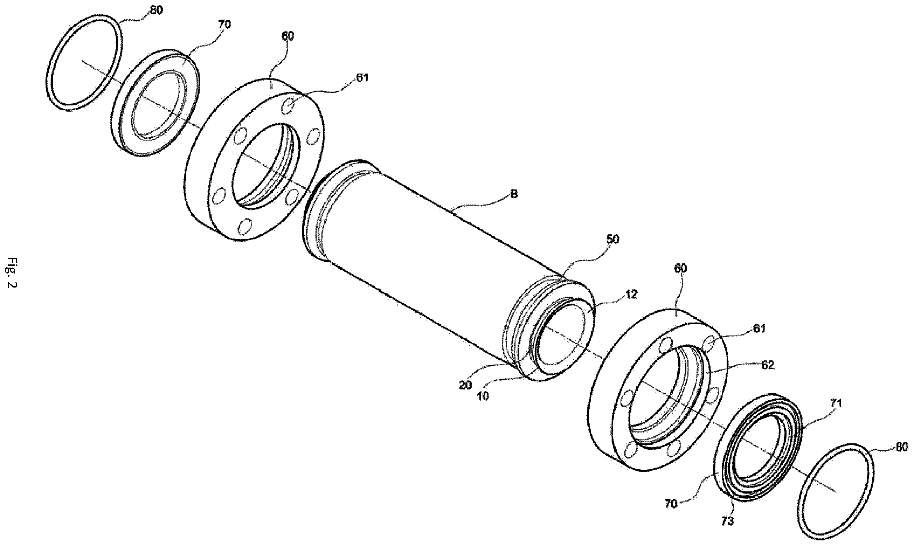

FIG. 1 is a perspective view showing a high pressure compensator according to an exemplary embodiment of the present disclosure. FIG. 2 is an exploded-perspective view showing the high pressure compensator according to the exemplary embodiment of the present disclosure.

As shown in FIGS. 1 and 2, the high pressure compensator is provided to connect a plurality of pipes on a pipeline through which high pressure fluid flows, and is configured to absorb vibrations and thermal expansion. The high pressure compensator includes a compensator body (B) consisting of an inside layer 10, an intermediate layer 20, and an outside layer 50, a flange 60, and a stoppers 70.

The compensator body (B) has a hollow tubular shape to provide a flow path enabling the high pressure fluid to flow, and is provided by laminating the inside layer 10, the intermediate layer 20, and the outside layer 50 made of rubber materials in order to efficiently prevent deformation caused by vibration and thermal expansion.

The fiber reinforcing layer 40 is arranged between the intermediate layer 20 and the outside layer 50 to prevent the compensator body (B) from being easily ruptured even when high internal pressure acts inside the compensator body (B), and a detailed description thereof will be described later.

The metal flange 60 is provided at each of opposite end portions of the compensator body (B). While the compensator is arranged between the pipes to connect to each other, the flange 60 is fastened to a flange of another pipe by bolts (not shown) and nuts (not shown).

The flange 60 has a hollow cylindrical shape, and has a plurality of fastening holes 61 that are formed by penetrating an outer portion of the flange 60 to allow the bolts to pass through the fastening holes and be fastened.

The flange 60 is made of a non-ferrous metal material, and preferably, the flange 60 may be made of aluminum bronze casting (ALBC) with high strength and excellent heat resistance, mechanical properties, and seawater resistance, but the present disclosure is not limited thereto.

In addition, when high internal pressure acts on the compensator, a pair of stoppers 70 is provided to prevent separation or a damage of a coupling portion between the compensator body (B) and the flange 60.

Each of the stoppers 70 is formed in a ring shape, and two stoppers make a pair and are provided at opposite end portions of the compensator. Coupling force between the compensator body (B) and the flange 60 may be increased as a first surface of the stopper is in close contact with an end of the compensator body (B) and an end of the flange 60.

The stoppers 70 may be preferably made of a material same as a material of the flange 60.

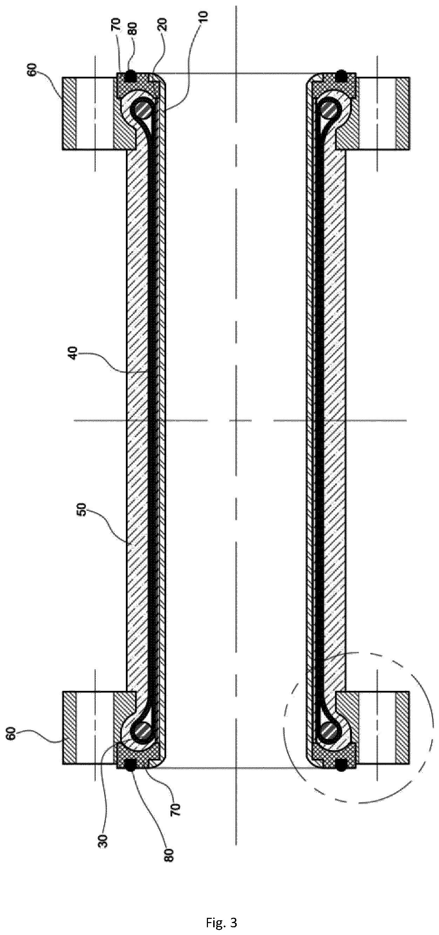

FIG. 3 is a sectional view showing the high pressure compensator according to the exemplary embodiment of the present disclosure.

As shown in FIG. 3, the compensator body (B) is configured by laminating the inside layer 10, the intermediate layer 20, and the outside layer 50 made of rubber materials in order. The fiber reinforcing layer 40 made of a fiber material is disposed between the intermediate layer 20 and the outside layer 50.

In detail, the inside layer 10 has a hollow tubular shape and constitutes an inner circumferential surface of the compensator, i.e., an inner circumferential surface of the compensator body (B).

The inside layer 10 is made of synthetic rubber with the hardness of 60 to 70 in order to absorb vibrations in a low frequency band generated in the compensator. When the hardness is less than 60 or higher than 70, the inside layer 10 may not sufficiently absorb the vibrations in the low frequency band.

In order for the inside layer 10 to efficiently absorb the vibrations in the low frequency band, it is preferable that the inside layer 10 is made of nitrile butadiene rubber (NBR) with hardness of 65.

Next, the intermediate layer 20 is laminated on an outside of the inside layer 10, and serves to absorb vibrations in the high frequency band.

The vibrations in the high frequency band have a high degree of damping in a medium, so long-distance propagation is unfavorable. Whereas the vibrations in the low frequency band have a low degree of damping in a medium, so long-distance propagation is possible compared to the high frequency band. Therefore, as the intermediate layer 20 is laminated on the outside of the inside layer 10, the compensator may be compensated by sufficiently absorbing from the vibrations in the low frequency band to the vibrations in the high frequency band generated in the pipeline.

The intermediate layer 20 should be made of a natural rubber (NR) with hardness of 40 to 50 in order to efficiently absorb the vibrations in the high frequency band, and it is more preferable that the intermediate layer is made of natural rubber with hardness of 45.

Meanwhile, a ring-shaped fixing ring 30 is coupled to an outer circumferential surface of each of opposite end portions of the intermediate layer 20.

The fixing ring 30 is provided to fix a fiber reinforcing material constituting the fiber reinforcing layer 40. The fixing ring 30 is preferably made of stainless steel with good corrosion and acid resistance, and with high temperature strength, but the present disclosure is not limited thereto.

The reinforcing material is configured such that each of opposite end portions thereof is inserted into an inner circumference of the fixing ring 30 and wraps an outer circumferential surface of the fixing ring 30, and is closely fixed to an outside of the intermediate layer 20 by the fixing ring 30 to form the fiber reinforcing layer 40.

As described about the fiber reinforcing layer 40, the fiber reinforcing layer 40 is arranged between the intermediate layer 20 and the outside layer 50 to compensate the compensator body (B), so that the compensator body (B) is not easily ruptured even when high internal pressure acts on the compensator body (B). Preferably, the reinforcing material constituting the fiber reinforcing layer 40 may be made of aramid fiber.

In general, aramid fiber is fiber of aromatic polyamide, and is known to have superior tensile strength, toughness, and heat resistance compared to conventional organic fiber.

Accordingly, the compensator has the fiber reinforcing layer 40 made of aramid fiber to increase rupture strength of the compensator body (B), so that the compensator may be designed to withstand internal pressure without a rupture even when high pressure is applied to the inside thereof.

Meanwhile, the outside layer 50 laminated on an outside of the fiber reinforcing layer 40 is made of a nonflammable rubber material, and the outside layer 50 may be preferably made of chloroprene rubber (CR) with excellent weather resistance in addition to nonflammable.

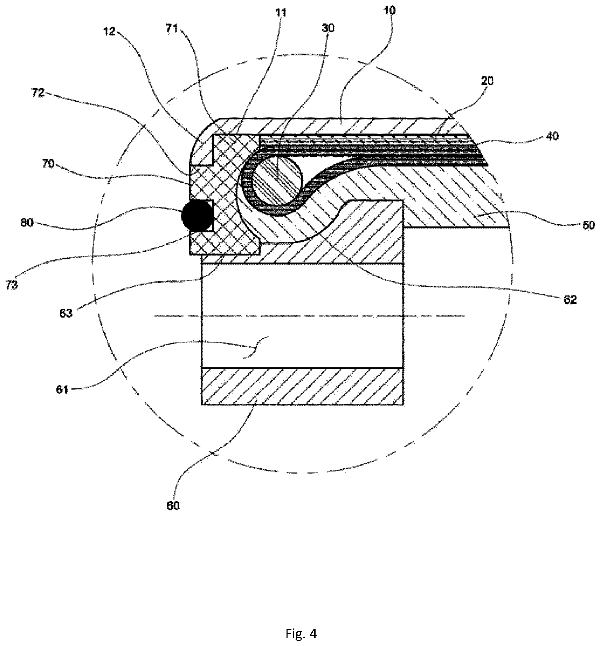

FIG. 4 is a partial detailed view showing an installation state of the flange and the stopper shown in FIG. 3.

As shown in FIG. 4, the flange 60 has a hollow cylindrical shape, and has a curved portion 62 rounded at a center portion of an inner circumferential surface thereof.

The curved portion 62 is a portion where an end of the outside layer 50 is in close contact. The outside layer 50 is laminated along an outer edge of the fiber reinforcing layer 40 fixed by the fixing ring 30, so the outside layer 50 is formed such that opposite end portions with the fixing ring 30 and the fiber reinforcing layer 40 are rounded.

Therefore, the curved portion 62 is rounded to correspond to the end of the outside layer 50, so that a coupling force between the compensator body (B) and the flange 60 may be increased.

In addition, the flange 60 has a stepped portion 63 such that a portion of the flange 60 where the curved portion 62 ends is bent to seat an outer circumferential surface of each of the stoppers 70 thereon.

Meanwhile, the inside layer 10 has insertion portions 11 depressed to a predetermined depth on outer circumferential surfaces of opposite end portions of the inside layer 10 to be coupled to couplers 71 protruding toward the center along circumference of an inner circumferential surface of the stopper 70.

In other words, the stopper 70 is located in a space provided between the compensator body (B) and the flange 60 coupled to each other, and the outer circumferential surface of the stopper 70 is in close contact with the stepped portion 63 and the inner circumferential surface thereof is fixed to the inside layer 10, thereby increasing a coupling force between the compensator body (B) and the flange 60. Therefore, unlike the conventional compensator, the compensator body (B) and the flange 60 may be prevented from being easily separated or damaged due to high internal pressure.

The stopper 70 has a curved surface that is formed in a concavely rounded shape on a first surface thereof to be supported in closed contact with the end with a convexly rounded shape of the outside layer 50.

Through such shape of the stopper 70, a surface are of contact between the stopper 70 and the compensator body (B) is increased to improve a supporting force of the stopper 70 against the compensator body (B) and the flange 60.

In addition, the stopper 70 has a groove 73 formed by being grooved to a predetermined depth along the shape of the stopper 70 on a second surface thereof, and a ring-shaped packing 80 made of a rubber material is inserted into and fixed in the groove 73 to provide airtightness between the pipes fastened to the compensator.

Although the preferred embodiments of the present disclosure have been disclosed in the detailed description with reference to with the accompanying drawings, it should be understood that the terminology used herein is for the purpose of describing particular embodiments only and is not intended to limit the meaning of elements or to limit the scope and sprit of the invention. Accordingly, those skilled in the art will appreciate that various modifications, additions and substitutions are possible, without departing from the scope and spirit of the invention as disclosed in the accompanying claims.

## Claims

1. A high pressure compensator, the high pressure compensator being provided between pipelines through which high pressure fluid flows and connecting a plurality of pipes to each other, the high pressure compensator comprising:
an inside layer made of a rubber material that absorbs vibrations in a low frequency band, the inside layer having a hollow tubular shape and providing an inner circumferential surface of the compensator, and having insertion portions depressed to a predetermined depth on outer circumferential surfaces of opposite end portions of the inside layer;
an intermediate layer made of a rubber material that absorbs vibrations in a high frequency band, and laminated on an outside of the inside layer;
a pair of fixing rings having a ring shape, and provided at opposite end portions of the intermediate layer, respectively;
a fiber reinforcing layer made of aramid fiber, the fiber reinforcing layer being laminated on an outside of the intermediate layer, and having opposite end portions inserted in inner circumferences of the fixing rings and fixed thereto while covering outer circumferential surfaces of the fixing rings;
an outside layer made of a nonflammable rubber material, and laminated on an outside of the fiber reinforcing layer;
a pair of flanges having a hollow cylindrical shape, and coupled to opposite end portions of the outside layer, respectively, and having a plurality of fastening holes formed by penetrating the flanges; and
a pair of stoppers having a ring shape, the stoppers being provided at opposite ends of the compensator, respectively, each of the stoppers having a surface that is in close contact with both an end portion of the outside layer and an end portion of an associated one of the flanges, and having a coupler protruding along a circumference of an inner circumferential surface thereof to be securely inserted in each of the insertion portions.

2. The high pressure compensator of claim 1, wherein the inside layer is made of nitrile butadiene rubber (NBR) with hardness of 60 to 70.

3. The high pressure compensator of claim 1, wherein the intermediate layer is made of natural rubber (NR) with hardness of 40 to 50.

4. The high pressure compensator of claim 1, wherein each of the stoppers comprises a curved surface that is concavely rounded on a first surface of the stopper to be in close contact with the convexly rounded end portion of the outside layer, and
a groove that is formed by being grooved to a predetermined depth along a shape of the stopper on a second surface of the stopper.

5. The high pressure compensator of claim 4, wherein a ring-shaped packing made of a rubber material is securely inserted in the groove.
